(19) **Europäisches Patentamt**

**European Patent Office**

**Office européen des brevets**

(11) Publication number: **0 007 731**
**A2**

(12) # EUROPEAN PATENT APPLICATION

(21) Application number: **79301332.7**

(22) Date of filing: **09.07.79**

(51) Int. Cl.³: **B 01 F 17/42**
**B 01 F 17/00, A 01 N 25/30**

(30) Priority: **28.07.78 GB 3158678**

(43) Date of publication of application:
**06.02.80 Bulletin 80/3**

(84) Designated Contracting States:
**BE CH DE FR GB IT NL**

(71) Applicant: **IMPERIAL CHEMICAL INDUSTRIES LIMITED**
**Imperial Chemical House Millbank**
**London SW1P 3JF(GB)**

(72) Inventor: **Tadros, Tharwat Fouad**
**89, Nash Grove Lane**
**Wokingham, Berkshire(GB)**

(72) Inventor: **Waite, Frederick Andrew**
**12 Sherborne Walk**
**Farnham Common, Buckinghamshire(GB)**

(74) Representative: **Wood, Dennis John Cecil et al,**
**Imperial Chemical Industries Limited Legal Department:**
**Patents Thames House North Millbank**
**London SW1P 4QG(GB)**

(54) **Process for the production of dispersions of hydrophobic particulate solids (e.g. pesticides) and the particulate dispersions thus obtained.**

(57) Aqueous dispersions of particles of non-polymeric hydrophobic solids are stabilised against flocculation by means of a block or graft copolymer containing in the molecule a component which is solvated by the aqueous medium and another component of a specified degree of hydrophobicity which is associated with the solid particles. A limited degree of controlled and reversible flocculation of the particles can be introduced by the additional presence of a polymer which is soluble in the aqueous medium.

EP 0 007 731 A2

TITLE MODIFIED
see front page

PARTICULATE DISPERSIONS

This invention relates to dispersions of solid, non-polymeric hydrophobic particles in aqueous media, the particles bearing on their surface adsorbed polymer chains, and to the manufacture of such dispersions.

It is already known to produce dispersions of solid, non-polymeric hydrophobic particles in aqueous media with the aid of conventional dispersing agents such as sulphonated naphthalene-formaldehyde condensates, lignosulphonates, partially hydrolysed poly(vinyl acetate) or poly(ethylene oxide) - poly(propylene oxide) block copolymers. In certain practical situations, however, for example in the application as seed dressings of dispersions containing biologically active solid particles, it is desirable to attain high volume concentrations of the disperse phase and it is found that, when using these conventional dispersing agents, the products usually have markedly non-Newtonian flow properties or, in some cases, are even gel-like. Such characteristics pose difficulties both for the manufacture of the dispersions, e.g. by milling processes, and for their subsequent use; they can be attributed to the existence of substantial flocculation of the disperse particles, which in turn is probably due to relatively weak attachment of the dispersing agent molecule to the particle surface.

The present invention is based on the discovery that, by employing as dispersing agents a certain class of amphipathic copolymer, it is possible to produce dispersions in aqueous media of hydrophobic, non-polymeric solid particles which have higher disperse phase volume concentrations than have hitherto been attainable and which yet possess a high degree of fluidity; alternatively, it is possible thereby to prepare fluid dispersions having the presently attainable levels of disperse phase volume concentration with a significant reduction in the weight ratio of dispersing agent to disperse phase which is required. In British Patent Specification No. 1,211,344 there are described, inter alia, dispersions in aqueous media of non-polymeric solid particles in which the dispersing agents used are amphipathic graft copolymers. These graft copolymers happen to belong to the class of amphipathic copolymer defined according to the present invention, but they are shown in the document in question only as being used in conjunction with hydrophilic solid particles. The dispersions thus obtained do not possess the advantages afforded by the present invention.

Thus according to the present invention there is provided a dispersion in an aqueous medium of a non-polymeric hydrophobic particulate solid substantially all the particles of which have a size less than 100 microns, the dispersion containing a block or graft copolymer the molecule of which comprises at least one component (A), of molecular weight at least 250, which is solvated by the aqueous medium and at least one other component (B), of molecular weight at least 500 and having a minimum degree of hydrophobicity as hereinafter defined, which is associated with the particulate solid, the total weight ratio of components A to components B in the copolymer being from 1:10 to 10:1 and the ratio of the number of individual components A to individual components B in the copolymer molecule being from 10:1 to 1:2.

According to another aspect of the invention there is provided a process for the production of a dispersion as hereinabove defined, comprising dispersing a non-polymeric hydrophobic solid in an aqueous medium in the form of particles substantially all of which are of a size less than 100 microns, in the presence in the aqueous medium of a block or graft copolymer the molecule of which comprises at least one component (A), of molecular weight at least 250, which is solvatable by the aqueous medium and at least one other component (B), of molecular weight at least 500 and having a minimum degree of hydrophobicity as hereinafter defined, which becomes associated with the particulate solid, the total weight ratio of components A to components B in the copolymer being from 1:10 to 10:1 and the ratio of the number of individual components A to individual components B in the copolymer molecule being from 10:1 to 1:2.

By "solvated" or "solvatable" we mean herein that the molecular component A of the block or graft copolymer would, if it were unattached to the remainder of the copolymer molecule, be actually soluble in the aqueous medium wholly as individual molecules.

By "minimum degree of hydrophobicity" we mean that the component B of the block or graft copolymer would, if it were unattached to the remainder of the copolymer molecule, be sufficiently hydrophobic to be insoluble both in water and in methanol. The word "insoluble" is to be understood here as having its ordinary, practical meaning.

Tests whereby the suitability of any proposed component A or component B respectively may be determined will readily be devised by those skilled in the art.

Hydrophobic solid particles suitable for incorporation in the dispersions of the invention may be of many different types. In particular, they may be organic in nature, and one such type of interest comprises particles of biologically active hydrophobic solids, in particular pesticides such as fungicides, insecticides, bactericides and herbicides, which are commonly used in the form of dispersions or suspensions in water and are frequently applied by spray. Examples of suitable fungicides include ethirimol, maneb, difolatan and triadimefon. Examples of suitable insecticides include BHC, DDT, carbaryl and diphenylamine derivatives known for use as acaricides. Examples of suitable bactericides include BHA, BHT and salicylanilide derivatives. Examples of herbicides include atrazines, linuron, monolinuron, diuron, MCPA and 2:4 -D free acid.

Other suitable particles consist of water-insoluble pigments or dyestuffs, such as organic pigments and dyes, for example phthalocyanines, quinacridones and azo pigments.

Still other suitable particles consist of water-insoluble compounds which are valuable for pharmaceutical or veterinary application, such as oxyclozanide, primidone, sulphadimidine or griseofulvin.

As already stated, the solid particles present in the dispersions are of a size less than 100 microns. Within this limitation, it is possible for the particles to have a wide variety of average sizes and of size distributions. Thus the particles may range in size from 100 Å up to 100 microns, but in most cases a size range of from 0.1 to 1 micron, or possibly from 0.1 to 20 microns, depending on the intended end-use of the dispersion, will be appropriate.

The hydrophobic solid may if desired be brought to the required particle size and size distribution prior to its incorporation into the aqueous medium in the presence of the block or graft copolymer; in other words, the process of the invention will in such instances involve merely a re-dispersion in the aqueous medium of aggregated material already having the appropriate primary particle size. For this purpose the particles may be prepared in many different ways, for example by the milling of bulk material employing any of the processes conventionally used for the production of finely divided substances such as pigments; suitable processes include ball milling, bead milling, sand milling, pug milling, ultrasonic treatment and subjection to high shear.

Alternatively, and in many cases more conveniently, particles of the hydrophobic solid of the required size and size distribution may be produced in situ by the comminution of coarse particles of the solid in the presence of the aqueous medium and of the block or graft copolymer. Such coarser particulate material may be produced by, for example, the spray drying of a solution or dispersion of the material in a liquid, crystallisation of the material from solution, or precipitation of the material from solution by the addition of a non-solvent. The subsequent comminution, or reduction in particle size, may be achieved by subjecting the blend of the coarse particles, the aqueous medium and the block or graft copolymer to any of the milling or allied procedures referred to above.

The aqueous medium in which the dispersed particles are carried may consist of water alone, or it may consist of water together with minor proportions (i.e., in general, less than 50%) of other water-miscible or water-soluble organic or inorganic substances.

The block or graft copolymers employed in the dispersions and process of the invention are, as already indicated, composed essentially of two types of molecular component A and B having differing characteristics with respect to the aqueous medium and to the disperse particles. The copolymer may range from simple block copolymers of the AB, ABA or BAB types, through multiple block copolymers of the ABABAB ... types, to "comb" type graft copolymers of the structure $A_nB$, in which a plurality of the solvatable A components are attached at intervals to a polymer backbone constituting the hydrophobic, associatable B component. Preferably the copolymer is of this last-mentioned, "comb" type and has a slight weight excess of the solvatable components A over the hydrophobic components B, for example in a ratio of from 1.1 : 1 to 2 : 1. It is also preferred that, in this type of copolymer, the value of n, i.e. the number of A components' which are attached to each B component, should be in the range 3-10 (i.e. the number ratio of A components to B components should be in the range 3:1 to 10:1).

The molecular weight of each solvatable A component is preferably at least 500, and of each hydrophobic B component preferably at least 1000; moreover it is preferred that the total molecular weight of the copolymer should be at least 5000.

Examples of suitable A components which are solvatable by aqueous media include those derived from polyethylene glycol, poly(vinyl pyrrolidone), poly(acrylamide) or poly(vinyl alcohol).

Examples of suitable B components which satisfy the minimum hydrophobicity requirement hereinbefore stated include polymers and copolymers of styrene, methyl methacrylate, ethyl acrylate, 2-ethylhexyl acrylate, lauryl methacrylate or vinyl acetate, polyesters, polyamides and oligomers of aliphatic monohydroxy-monocarboxylic acids such as poly(12-hydroxy-stearic acid). It is preferred, however, that the B component, whilst satisfying the foregoing requirement, should be a flexible rather than a rigid polymer chain under the normal conditions of preparation of the dispersion, that is to say, a bulk polymer of the same composition as the B component should, under those conditions, be a plastic solid or a viscous liquid rather than a hard, tough, non-deformable or glassy solid. Thus, for example, a B component which is of a flexible nature at room temperature may be based on a 50:50 by weight copolymer of styrene and ethyl acrylate, or on polyethyl acrylate, or on poly-2-ethylhexyl acrylate,. or on a 50:50 by weight copolymer of methyl methacrylate and 2-ethylhexyl acrylate. Other suitable B components will be apparent to those skilled in the art; the suitability of any individual material for this purpose may readily be established by means of simple tests based on the definition of degree of hydrophobicity given above.

Such block or graft copolymers may be of either the addition or the condensation type, and may be made by a variety of routes which will be apparent to those skilled in the polymer art. For example, in the preparation of the "comb" type graft copolymers, a hydrophilic polymer suitable as the A component, such as the monomethyl ether of a polyethylene glycol of molecular weight 500 to 2000, can be converted to the acrylic or methacrylic ester, and this intermediate product can then be subjected to free radical-initiated copolymerisation with other unsaturated monomers such as styrene, ethyl acrylate or methyl methacrylate, in order to build up an appropriately hydrophobic polymer backbone constituting the B component from which are pendant a plurality of the A component side chains. Another suitable type of addition copolymer may be made by means of ionic polymerisation methods, for example by preparing a "living" polystyrene block and then reacting this with ethylene oxide in order to build up a poly-(oxyethylene) block attached thereto. Suitable condensation copolymers may be made, for example, by esterifying a polyethylene glycol with a high molecular weight monocarboxylic acid, such as an oligomer of 12-hydroxystearic acid, or by forming an alkyd resin from a polyethylene glycol, a polycarboxylic acid and optionally other polyhydric alcohols.

The hydrophobic component B of the block or graft copolymer may if desired also contain a small proportion of strongly polar groups or groups capable of forming hydrogen bonds, such as carboxyl, amino, hydroxy, nitro, nitrile, amide, urethane or sulphone groups, which may interact with groups present on the surface of the particulate solid.

The proportion of the block or graft copolymer used in the dispersion of the invention may vary a good deal according to the nature of the hydrophobic particulate solid and of the aqueous medium in which it is dispersed, but proportions of from 0.5% to 10%, based on the weight of the particles, will suffice to give dispersions of acceptable stability in a majority of cases.

According to the invention it is possible to prepare dispersions which have a disperse phase volume content in excess of 10% and yet are substantially deflocculated and exhibit a negligible yield value as measured, for example, on a Haake "Rotovisko". At disperse phase volume contents modestly above 10%, the proportion of the block or graft copolymer required to confer stability on the dispersions may be as little as one-fifth of that which is commonplace when using the conventional dispersing agents previously mentioned. On the other hand, it is possible, by using somewhat higher proportions of the block or graft copolymer, to produce dispersions having a disperse phase volume content as high as 40% or more and yet retaining a high degree of fluidity, which it is not possible to achieve with conventional dispersing agents however high the proportions of them that are used. Whilst the scope of the present invention is not dependent upon any theory or explanation of the way in which it operates, it is believed that the advantages just described are attributable to the improved strength of attachment of the block or graft copolymer to the surface of the hydrophobic particles, as compared with that of the conventional dispersing agents previously mentioned.

According to a further feature of the present invention, there may be additionally present in the dispersions as hereinbefore defined a polymer of molecular weight at least 1000 which is soluble in the aqueous medium, the concentration of the polymer in the aqueous medium being at least 0.01%, preferably at least 0.1%, by weight.

In the simplest case, the soluble polymer may be identical in chemical composition (though not necessarily in molecular weight) with the solvated component A.

The result of introducing such a soluble polymer into the dispersions is the bringing about of a limited degree of flocculation of the hydrophobic solid particles, as compared with their state in a dispersion not containing the soluble polymer. Whilst the principal objective of the present invention, expressed in its broadest terms, is the overcoming of the natural tendency of disp rsed fine particles to flocculate or aggregate, there are practical advantages in procuring a weak flocculation of the particles provided that such flocculation is controllable and is readily reversible. Dispersions according to the invention in which the solid particles are relatively large and have a significantly higher specific gravity than the aqueous medium may, whilst possessing the advantages hereinabove described, undergo a slow settlement of the particles under the influence of gravity, with the formation of a very densely packed layer of the settled particles which is difficult to re-disperse in the aqueous medium. This settlement can be avoided by the addition of a soluble polymer as defined above. The resulting controlled flocculation implies the existence of a very weak association of particles but one which is nevertheless sufficient to provide a more "open" texture in the settled-out material which enables it to be more easily re-dispersed.

The amount which is used of the polymer soluble in the aqueous medium, and the molecular weight of the polymer, may be higher than the respective minimum value specified above. The optimum amount and molecular weight in any individual case may readily be found by simple experimental observation of the settling behaviour of the dispersion as these parameters are varied. However, for general guidance it may be stated that the higher the molecular weight of the added soluble polymer, the smaller is the proportion of that polymer which needs to be added in order to achieve a satisfactory degree of

- 11 -

controlled flocculation.

Preferably the soluble polymer is of such a nature that, when it is blended with the solvatable component A of the block or graft Copolymer in a common good solvent, and a film is cast from the solution, the film obtained is optically clear. This condition will, of course, automatically be satisfied when the soluble polymer is identical in chemical composition with the component A. However, it is by no means essential that there should be such identity of composition, and in general the soluble polymer may be chosen from among such materials as polyethylene glycols, polyvinyl alcohol, polyacrylamide and polysaccharides.

The strength of the association between the hydrophobic solid particles, in the dispersions containing soluble polymer as hereinbefore defined, is very much weaker than that which operates between aggregated particles which are not protected by any stabilisation mechanism, and it is reversible in the sense that, if the dispersion is diluted with further aqueous medium (not containing the soluble polymer) so that the overall concentration of soluble polymer is reduced below the levels specified above, the particles can be restored to a fully deflocculated state. Such a diluted dispersion is ideally suitable for certain practical applications, for example the spray treatment of crops with a particulate pesticide, whilst the more concentrated dispersion from which it is made is more convenient from the point of view of shipment and storage prior to use.

Where a dispersion according to the invention is to contain a soluble polymer as just described, the latter is introduced by blending into the dispersion after the completion of the re-dispersion or comminution procedure, as the case may be. Preferably the soluble polymer is introduced in the form of an aqueous solution.

The invention is illustrated but not limited by the following Examples.

## EXAMPLE 1

Technical grade Ethirimol, 71% paste in water, (8439 parts) is blended in a high speed mixer with a dispersant A (240 parts) and urea (936 parts) in water (2886 parts). The blend is transferred to a continuous bead mill with a throughput of 5-7 litres/hour and an average residence time of 5-10 minutes. The volume ratio of dispersion to beads is 5:7, and the rotor tip speed is 15 metres/second. After standing for 24 hours with gentle agitation to allow the escape of air bubbles, the dispersion (dispersed solids concentration 48% w/w, 40% vol/vol) has a viscosity (when measured with a Haake "Rotovisko") of 30 centipoise at a shear rate of 57 sec$^{-1}$ at 25$^{O}$C, and a negligible yield value. The dispersion is so fluid that significant settling and 'claying' occurs within one week.

A 10% w/w solution of polyethylene glycol, molecular weight 20,000 (1200 parts) is blended with the dispersion and samples of the blend are stored for one year at 0$^{O}$, 25$^{O}$, 37$^{O}$ and 50$^{O}$C. In no case are any signs of settling or claying then observed.

In this example dispersant A is a copolymer of styrene, ethyl acrylate and the methacrylic acid ester of methoxy-terminated polyethylene glycol (molecular weight 750), the proportions of the monomers being 25 : 25 : 50 by weight respectively and the molecular weight of the hydrophobic styrene/ethyl acrylate polymer backbone being about 4000. For comparison, when dispersant A is replaced by an equal weight of a commercially available polyether block copolymer of average composition poly-(ethylene oxide) (mol.wt.1000) / poly-(propylene oxide) (mol.wt. 2000) / poly-(ethylene oxide) (mol.wt. 1000), a blend is produced which is too intractable to disperse. Reformulation to give a composition at 36.5% w/w of solid gives a blend which is capable of being handled by the bead mill but the dispersion has a high viscosity, with the consistency of whipped cream. When the dispersion is diluted with a solution of polyether block copolymer (2%) and urea (10%) in water to give dispersed solids contents 22.6, 18 and 13.6 w/w respectively, the diluted dispersions have viscosities of 420, 300 and 80 centipoise at a shear rate of 57 secs$^{-1}$ respectively.

The hydrophobic group of dispersant A is insoluble in both water and methanol, whereas that of the polyether·block copolymer, although insoluble in water, is soluble in methanol.

## EXAMPLES 2 - 7

The general procedure of Example 1 is repeated, using the ingredients and amounts thereof indicated under the heading "Charge A" in the accompanying Table 1.

The viscosity of each dispersion thus obtained is measured with the Haake "Rotovisko" at 57 secs$^{-1}$ shear rate at 25$^{O}$C. The values found are shown in the table. All the dispersions show a negligible yield value. Samples of these dispersions all settle over a period of less than a week to give a hard, clay-like sediment.

- 14 -

Samples of the above dispersions are also mixed, shortly after completion of the milling procedure, with an aqueous solution of a water-soluble polymer, as indicated under the heading "Charge B" in Table 1. The dispersions then obtained do not form any detectable sediment on standing for 6 months at 25°C.

- 15 -

TABLE 1

| Example No.<br><br>Ingredients; parts by weight.<br><br>CHARGE A | 2 | 3 | 4 | 5 | 6 | 7 |
|---|---|---|---|---|---|---|
| Ethirimol * | 568.2 | 588.8 | – | – | 522.0 | 576.3 |
| Lindane ($\gamma$-BHC)** | – | – | 478.5 | – | – | – |
| Diuron ** | – | – | – | 460.1 | – | – |
| Dispersant + | 22.7 | 20.3 | 19.1 | 18.4 | 19.7 | 19.9 |
| Urea | 88.6 | 79.2 | 67.0 | 92.0 | 98.5 | 99.4 |
| Water | 320.5 | 311.7 | 435.4 | 429.5 | 359.8 | 304.4 |
| Viscosity, cp. | 50 | 52 | 10 | 10 | 36 | 52 |
| Volume of disperse phase, % of total volume | 33 | 34 | 33 | 36 | 30 | 34 |
| CHARGE B | | | | | | |
| Dispersion from Charge A | 450 | 646 | 408 | 927 | 459 | 450 |
| PEG 20,000 ++ | 10 | – | – | – | – | 10 |
| Xanthan Gum | – | 1.5 | 2 | 3 | 1 | – |
| Water | 40 | 112.5 | 100 | 100 | 50 | 40 |

* Technical quality, 71% paste in water.

** Technical grade powder 95% active ingredient.

+ As described in Example 1.

++ Polyethylene glycol of mol.wt. 20,000

- 16 -

The Ethirimol dispersion obtained according to Example 1 above has the particle size distribution shown in Table 2 below. The particle size distribution of the Ethirimol dispersions obtained according to Examples 2, 3, 6 and 7 is similar to this. The particle size distributions of the technical grade Lindane and Diuron dispersions obtained according to Examples 4 and 5 respectively are also shown in Table 2.

TABLE 2

| Particulate solid | Percentage by weight present of particles less than (size in microns) | | | | | | | | |
|---|---|---|---|---|---|---|---|---|---|
| | 5.0 | 4.0 | 3.0 | 2.0 | 1.5 | 1.2 | 1.0 | 0.8 | 0.6 |
| Ethirimol | 98.4 | 96.9 | 92.8 | 84.4 | 72.4 | 61.4 | 53.9 | 45.9 | 34.6 |
| Lindane | 99.2 | 97.2 | 94.0 | 83.7 | 68.4 | 53.1 | 40.2 | 27.3 | 16.1 |
| Diuron | 95.3 | 92.2 | 87.1 | 74.1 | 61.0 | 48.6 | 39.6 | 34.1 | 27.2 |

EXAMPLES 8 - 11

By way of comparison, dispersions are also prepared of technical grade Ethirimol, as a typical hydrophobic particulate solid, and of pigment grade titanium dioxide, as a typical hydrophilic particulate solid, both in the presence of two different dispersants according to the general definition of the invention hereinabove given.

The general procedure of Example 1 is followed, using the ingredients and amounts thereof indicated in the accompanying Table 3. The viscosities of the two Ethirimol dispersions (Examples 8 and 9) were measured with the Haake "Rotovisko" at 57 sec$^{-1}$ shear rate at 25$^{\circ}$C. The values found are shown in the table. In the case of the two titanium dioxide formulations (Examples 10 and 11) the initial mixes of the ingredients delivered from the high speed mixer, although at similar disperse phase volume contents to those of Examples 8 and 9, are so thick that it is impossible to transfer them to the bead mill. Viscosity measurements are likewise impossible to perform.

### TABLE 3

| Example No.<br><br>Ingredients parts by weight | 8 | 9 | 10 | 11 |
|---|---|---|---|---|
| Ethirimol * | 576 | 543 | | |
| Titanium dioxide + | - | - | 140.8 | |
| Titanium dioxide ++ | - | - | - | 141.3 |
| Dispersant B | 20 | - | 3 | 3 |
| Dispersant C | - | 20 | - | - |
| Urea | 79.2 | 79.2 | - | - |
| Water | 324.8 | 357.8 | 63.9 | 63.9 |
| Viscosity, cp. | 15.6 | 41.7 | - | - |
| Volume of disperse phase, % of total volume | 33 | 32 | 33 | 33 |

 * Technical quality, 71% paste in water.
 + Grade RCR6, ex. Tioxide International
++ Grade RHD2, ex. Tioxide International

Dispersant B is a graft copolymer obtained by copolymerising the methacrylic acid ester of methoxy-terminated polyethylene glycol (molecular weight 2000) with lauryl methacrylate in the weight ratio of 3 : 5. The molecular weight of the poly(lauryl methacrylate) block is about 10,000.

Dispersant C is a similar graft copolymer obtained by copolymerising the same two materials in the weight ratio of 1:1.

## EXAMPLE 12

This Example illustrates the use as dispersant of a block copolymer of the condensation type.

Technical grade Ethirimol, 73.7% paste in water (732 parts), a dispersant D (18 parts) and water (250 parts) are blended in a high speed mixer and subsequently passed through a continuous bead mill in the manner described in Example 1. The resulting dispersion has a viscosity of 43 centipoise when measured with a Haake "Rotovisko" at 25°C and a shear rate of 57 sec$^{-1}$.

Dispersant D is a polyester obtained by condensing together in the melt, in the presence of tetrabutyl titanate as catalyst, the monoethyl ether of polyethylene glycol mol.wt. 2000 (2 moles), neopentyl glycol (6 moles) and isophthalic acid (7 moles), using toluene as entraining liquid to remove water of reaction. The overall molecular weight of the polymer is 5,700.

The particle size distribution of the Ethirimol dispersion obtained according to this Example is shown in Table 4 below.

The hydrophobic component of dispersant D
(viz. a polyester obtained by condensing neopentyl
glycol (6 moles) and isophthalic acid (7 moles) only)
is insoluble both in water and in methanol.

TABLE 4

| Percentage by weight present of particles less than (size in microns) | | | | | | | |
|------|------|------|------|------|------|------|------|
| 5.0 | 4.0 | 3.0 | 2.0 | 1.5 | 1.2 | 1.0 | 0.8 |
| 92.6 | 86.8 | 81.2 | 63.9 | 49.1 | 37.0 | 29.5 | 21.7 |

WE CLAIM:-

1. A dispersion in an aqueous medium of a non-polymeric hydrophobic particulate solid substantially all the particles of which have a size less than 100 microns, the dispersion containing a block or graft copolymer the molecule of which comprises at least one component (A), of molecular weight at least 250, which is solvated by the aqueous medium and at least one other component (B), of molecular weight at least 500 and having a minimum degree of hydrophobicity as hereinbefore defined, which is associated with the particulate solid, the total weight ratio of components A to components B in the copolymer being from 1:10 to 10:1 and the ratio of the number of individual components A to individual components B in the copolymer molecule being from 10:1 to 1:2.

2. A dispersion as claimed in claim 1, wherein the hydrophobic particulate solid is a pesticide, in particular a fungicide, an insecticide, a bactericide or a herbicide.

3. A dispersion as claimed in claim 1 or claim 2, containing a graft copolymer of the structure $A_n B$, wherein a plurality of solvatable A components are attached at intervals to a polymer backbone constituting the hydrophobic, associatable B component and wherein the A components provide a slight weight excess over the B components.

4. A dispersion as claimed in claim 3, wherein in the graft copolymer:-

   (i) the weight ratio of the A components to the B components is from 1.1:1 to 2:1;

   (ii) the number ratio of the A components to the B components is from 3:1 to 10:1;

(iii)   the molecular weight of each A component is at least 500, of each B component at least 1000, and of the copolymer as a whole at least 5000.

5.   A dispersion as claimed in any one of claims 1 to 4, wherein the A component of the block or graft copolymer is selected from polyethylene glycol, poly(vinylpyrrolidone), poly(acrylamide) and poly(vinyl alcohol) and the B component is selected from polymers and copolymers of styrene, methyl methacrylate, ethyl acrylate, 2-ethylhexyl acrylate, lauryl methacrylate and vinyl acetate, polyesters, polyamides and oligomers of aliphatic monohydroxy-monocarboxylic acids.

6.   A dispersion as claimed in claims 1 or claims 2, wherein the block or graft copolymer is the product of esterification of a polyethylene glycol with a high molecular weight monocarboxylic acid, or an alkyd resin formed from a polyethylene glycol, a polycarboxylic acid and optionally other polyhydric alcohols.

7.   A dispersion as claimed in any one of claims 1 to 6, wherein there is additionally present a polymer of molecular weight at least 1000 which is soluble in the aqueous medium, the concentration of the soluble polymer in the aqueous medium being at least 0.01% by weight.

8.   A process for the production of a dispersion as claimed in any one of claims 1 to 7, comprising dispersing a non-polymeric hydophobic solid in an aqueous medium in the form of particles substantially all of which are of a size less than 100 microns, in the presence in the aqueous medium of a block or graft copolymer the molecule of which comprises at least one component (A), of molecular weight at least 250, which is solvatable by the aqueous medium and at least one other component (B), of molecular weight at least 500 and having a minimum degree of hydrophobicity as hereinbefore defined, which becomes associated with the particulate solid, the total weight ratio of components A to components B in the copolymer molecule being from 1:10 to 10:1 and the ratio of the number of individual components A to individual components B in the copolymer molecule being from 10:1 to 1:2.

9. A process as claimed in claim 8, wherein the hydrophobic solid is dispersed in the aqueous medium by comminution of coarse particles of the solid in the presence of the aqueous medium and of the block or graft copolymer.

10. A process as claimed in claim 9 or claim 10, wherein there is subsequently incorporated into the dispersion so obtained, in a concentration of at least 0.1% by weight in the aqueous medium, a polymer of molecular weight at least 1000 which is soluble in the aqueous medium.